# FASCICULE DE BREVET EUROPEEN

(11) **EP 3 072 774 B1**
(45) Date de publication et mention de la délivrance du brevet: **23.09.2020**
(21) Numéro de dépôt: 16161913.5
(22) Date de dépôt: 23.03.2016
(51) Int. Cl.: B61K 9/12, G01G 19/00, G01L 5/00

(54) **ROUE ET DISPOSITIF DE MESURE DE FORCES POUR UN VEHICULE FERROVIAIRE**
RAD UND KRAFTMESSVORRICHTUNG FÜR SCHIENENFAHRZEUG
WHEEL AND FORCE-MEASUREMENT DEVICE FOR A RAIL VEHICLE

(30) Priorité: 26.03.2015 FR 1552560
(43) Date de publication de la demande: 28.09.2016
(73) Titulaire: SNCF Mobilités, 93200 Saint-Denis (FR)
(72) Inventeur: VUILLAUME, Philippe, 91860 EPINAY sous SENART (FR); BAUDOIN, Philippe, 75012 PARIS (FR)
(74) Mandataire: Argyma

(56) Documents cités:
- EP-A1- 2 439 508
- WO-A1-2006/128878
- JP-A- 2007 331 492
- HIROMICHI KANEHARA ET AL: "Measuring rail/wheel contact points of running railway vehicles", WEAR, vol. 253, no. 1-2, 1 juillet 2002 (2002-07-01), pages 275-283, XP055249110, CH ISSN: 0043-1648, DOI: 10.1016/S0043-1648(02)00114-X

## Description

### DOMAINE TECHNIQUE GENERAL ET ART ANTERIEUR

La présente invention concerne le domaine ferroviaire et plus particulièrement la mesure de l'interaction entre les roues d'un véhicule ferroviaire et les rails de la voie de chemin de fer sur lesquels circule le véhicule.

Un véhicule ferroviaire, tel qu'un train à grande vitesse TGV ®, comprend de manière classique une pluralité de voitures comportant des essieux sur lesquels sont montées des roues, les roues entrant en contact avec les rails. Par nature, une roue comporte un moyeu central, une partie annulaire intérieure entourant le moyeu, désignée « toile de la roue », et une partie annulaire extérieure entourant la toile, désignée « bandage de la roue », qui comporte une table de roulement destinée à venir en contact avec le rail.

De manière classique, le rail s'étendant longitudinalement selon un axe longitudinal X, une roue est en appui vertical sur le rail selon un axe vertical Z qui est orthogonal à l'axe X. La direction transversale est définie selon un axe Y orthogonal aux axes X, Z de manière à former un repère orthogonal (X, Y, Z). Par la suite, les forces de contact verticales Fz, transversales Fy et longitudinales Fx sont référencées dans un référentiel orthogonal (X, Y, Z).

Afin d'optimiser le déplacement du véhicule ferroviaire sur les rails, il est primordial de connaître la position latérale, c'est-à-dire la position selon l'axe Y, du point de contact entre une roue et le rail sur la table de roulement.

On connaît la demande EP2457800 qui enseigne une roue de mesure comportant une toile dans laquelle sont formés des orifices. Un capteur de déformation est monté dans chacun des orifices et orienté dans ledit orifice afin de favoriser la détection d'une déformation longitudinale de la roue en fonctionnement. La demande EP2457800 ne permet pas la détermination de la position latérale du point de contact.

Le document JP 2007331492 A concerne une roue pour mesurer de manière continue la position d'une roue avec un rail.

De plus, on connaît par la demande FR2368701 A1 une roue pour véhicule ferroviaire comportant des orifices ménagés dans le bandage de la roue dans lesquels sont disposées des jauges de contrainte de manière à mesurer les forces verticales Fz tout en déterminant le point de contact entre la roue et le rail. Cette roue de mesure comprend de nombreux évidements qui viennent fragiliser la roue de mesure. Aussi, un tel système n'est pas applicable pour tout type de bandage de roue.

Il a été également présenté dans l'art antérieur « Measuring rail/wheel contact points of running railway vehicles - Hiromichi Kanehara, Takehiko Fujioka - Wear - Volume 253, Issues 1-2, July 2002, Pages 275-283» une méthode de détermination de la position latérale du point de contact. Cependant, cette méthode étant sensible à la vitesse de rotation de la roue, elle ne peut pas être appliquée pour du matériel ferroviaire à grande vitesse du type TGV ®.

L'invention a donc pour but de remédier à ces inconvénients en proposant une roue ferroviaire de conception nouvelle pouvant mesurer de manière précise la position latérale du point de contact roue/rail et qui soit fiable pour une roue ferroviaire entraînée à haute vitesse.

### PRESENTATION GENERALE DE L'INVENTION

A cet effet, l'invention concerne une roue pour un véhicule ferroviaire, la roue comportant une toile dans laquelle est formé au moins un orifice, au moins un capteur de déformation étant monté dans ledit orifice pour mesurer les déformations verticales lors du contact de la roue avec un rail.

L'invention est remarquable en ce que, la toile comportant une face intérieure, destinée à être tournée vers le centre d'une voie ferroviaire en utilisation, et une face extérieure opposée à la face intérieure, la toile comportant un plan de fibre neutre s'étendant dans l'épaisseur de la toile à égale distance de la face intérieure et de la face extérieure dudit orifice, le capteur de déformation est décalé par rapport audit plan de fibre neutre afin d'augmenter la sensibilité des déformations verticales à la position latérale du point de contact roue/rail.

En effet, de manière avantageuse, on perturbe la mesure des déformations verticales en décalant la position du capteur de déformation par rapport au plan de fibre neutre dudit orifice afin d'augmenter la sensibilité des déformations verticales à la position latérale du point de contact roue/rail.

La position latérale du point de contact influence les déformations verticales car le gradient de contrainte à l'intérieur d'un orifice est composé d'une partie due à la force de compression et d'une partie due à la flexion de la toile. Le gradient de contrainte relatif à la flexion de la toile dépend fortement de la position latérale du point de contact. Le gradient de contrainte relatif à la flexion de la toile peut être mesuré aisément en dehors du plan de fibre neutre.

Ainsi, de manière pratique et rapide, on peut déduire d'une mesure de déformations verticales la position latérale du point de contact, ce qui permet d'améliorer la détermination des efforts mécaniques reçus par la roue au cours de son utilisation, en particulier, son comportement dynamique.

De manière préférée, ledit capteur de déformation s'étend sur une zone de contrainte latérale dudit orifice afin d'augmenter sa sensibilité aux déformations verticales.

De manière préférée, le capteur de déformation est décalé par rapport audit plan de fibre neutre vers la face extérieure de manière à être apte à mesurer un moment de flexion sur la toile.

Selon un aspect préféré de l'invention, la roue comporte au moins quatre orifices formés dans la toile à une même distance radiale du centre de la roue, écartés angulairement de 90° et appartenant à un même plan de mesure, au moins un capteur de déformation étant monté dans chacun desdits orifices. Ainsi, on détecte la position latérale du point de contact roue/rail de manière uniforme à la périphérie de la roue. En outre, comme les capteurs de déformation appartiennent à un même plan de mesure et sont sur un même rayon, l'influence de la force centrifuge est identique. De préférence, chaque orifice comporte au moins deux capteurs de déformation afin d'améliorer la mesure des déformations verticales. De préférence encore, les capteurs de déformation sont placés dans des zones de contrainte latérale d'un orifice.

De manière préférée, les capteurs de déformation sont reliés entre eux pour former un pont de Wheatstone adapté pour fournir un signal de déformation. Un tel pont permet de fournir un signal de déformation qui modélise l'ensemble de la roue.

De manière préférée, le pont de Wheatstone est configuré pour calculer la différence entre la somme des déformations mesurées dans les premier et troisième orifices diamétralement opposés et la somme des déformations mesurées dans les deuxième et quatrième orifices diamétralement opposés. Un tel pont de Wheatstone permet une compensation naturelle des effets de la force centrifuge.

L'invention concerne également un dispositif de mesure de forces de contact d'une roue d'un véhicule ferroviaire sur un rail, le dispositif comportant une roue telle que présentée précédemment et un calculateur relié à ladite roue et configuré pour calculer la position latérale de contact roue/rail en fonction des déformations verticales mesurées par ledit capteur de déformation.

De manière préférée, le dispositif comporte des moyens de détection de la position angulaire dudit orifice par rapport à la position de contact roue/rail. On peut associer pour chaque position angulaire de contact une position latérale de contact.

L'invention concerne également un procédé de détermination de la position latérale du point de contact roue/rail pour une roue telle que présentée précédemment, le procédé comportant :
- une étape de mesure des déformations verticales par le capteur de déformation monté dans l'orifice et décalé par rapport au plan de fibre neutre ; et
- une étape de détermination de la position latérale du point de contact roue/rail par comparaison de ladite mesure de déformations verticales avec une mesure de référence obtenue préalablement.

De manière préférée, la mesure de référence est obtenue lors de l'étalonnage du capteur de déformation de la roue sur un banc d'étalonnage.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique de face d'une roue de mesure de forces selon une forme de réalisation de l'invention ;
- la figure 2 est une vue rapprochée d'un orifice de la figure 1 ;
- la figure 3 est une vue en coupe de la roue de la figure 1 ;
- la figure 4 est une vue rapprochée de la figure 3 ;
- la figure 5 est un diagramme schématique d'un pont de Wheatstone reliant les capteurs de déformation de la roue ; et
- les figures 6A-6C représentent respectivement des gradients de déformation de la roue en compression, en flexion et en combinaison.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

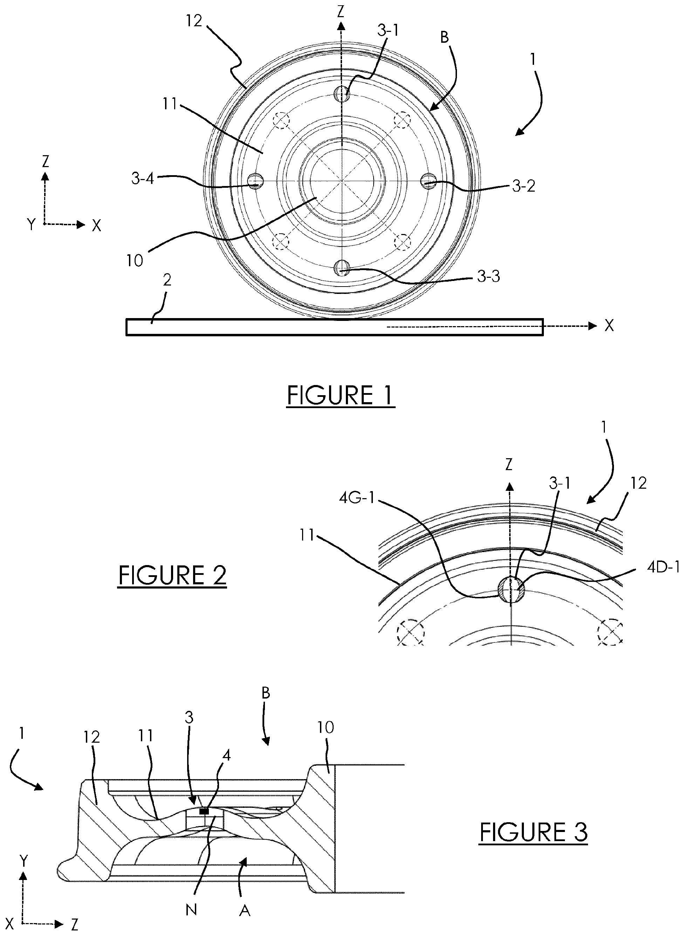

Une roue 1 de mesure de force pour un véhicule ferroviaire est représentée schématiquement sur la figure 1 en position d'utilisation sur un rail 2. La roue circulaire 1 est principalement réalisée en acier et comporte un moyeu central 10 destiné à se relier à un essieu de véhicule ferroviaire, un bandage de roue 12 se présentant sous la forme d'une couronne annulaire extérieure et une toile de roue 11 se présentant sous la forme d'une couronne annulaire intérieure située entre le moyeu 10 et le bandage 12. La roue 1 est monobloc, la toile de roue 11 étant solidaire du bandage 12 pour former un ensemble structural.

De manière connue, la toile 11 comporte une face intérieure A (Figure 3) destinée à être tournée vers la voie ferrée en utilisation et une face extérieure B, opposée à la face intérieure A.

De manière classique, le bandage 12 de la roue 1 est destiné à entrer en contact avec un rail 2 représenté sur la figure 1. Le rail 2 s'étend selon une direction longitudinale X, la roue 1 s'appuyant verticalement sur le rail 2 selon une direction verticale Z. Par la suite, les forces de contact verticales Fz, transversales Fy et longitudinales Fx entre la roue 1 et le rail 2 sont référencées dans le référentiel orthogonal (X, Y, Z) de la figure 1.

Dans cet exemple, la roue 1 possède un diamètre extérieur de l'ordre de 890 mm et est percée dans sa toile 11 d'une pluralité d'orifices 3. La roue 1 comporte un centre de roue (non référencé), la direction radiale étant définie par rapport au centre de roue. Comme représenté sur la figure 2, chaque orifice 3 est traversant dans la toile 11 de la roue 1 et est formé sur un diamètre intérieur de l'ordre de 530 mm de la roue 1, le diamètre de chacun des orifices 3 étant de l'ordre de 50 mm.

L'invention a été ici présentée pour des orifices circulaires 3 mais il va de soi que l'invention s'applique également pour des orifices de forme ovale ou elliptique.

Un orifice 3 comporte à sa périphérie des zones de contraintes dont la sensibilité aux déformations varie selon le type de déformations. En effet, les forces de déformations sont amplifiées par la présence d'un orifice 3 dans la toile 11 de la roue 1, certaines zones de la périphérie de l'orifice 3 amplifiant plus certains types de déformations que d'autres. En particulier, pour un unique orifice 3, les zones de contraintes latérales, situées entre les zones de contraintes radialement intérieure et extérieure, sont sensibles aux déformations verticales. Comme illustré à la figure 3, la toile 11 comporte un plan de fibre neutre N s'étendant dans l'épaisseur de la toile 11 à égale distance de la face intérieure A et de la face extérieur B de chaque orifice 3.

Dans cet exemple de réalisation, en référence à la figure 1, la roue 1 comporte quatre orifices 3 à une même distance radiale du centre de roue et écartés angulairement de 90°. Par la suite, les orifices 3 sont référencés consécutivement 3-1, 3-2, 3-3 et 3-4. Il va de soi que la roue 1 pourrait comprendre plus de quatre orifices, en particulier, huit afin d'augmenter la précision spatiale. En effet, pour une roue comportant huit orifices, une mesure est réalisée tous les 45° au lieu de 90° pour une roue comportant quatre orifices.

Dans cette forme de réalisation, deux capteurs de déformation 4 sont montés dans chacun des orifices 3 comme illustré à la figure 2. Les deux capteurs 4 sont montés diamétralement opposés dans un orifice 3, de préférence, de manière latérale pour augmenter leur sensibilité aux déformations verticales. Autrement dit, chaque orifice 3 est associé à un capteur de déformation droite 4D et un capteur de déformation gauche 4G. Dans cet exemple, les orifices 3-1, 3-2, 3-3, 3-4 sont respectivement associés aux capteurs de déformation 4G-1, 4D-1 ; 4G-2, 4D-2 ; 4G-3, 4D-3 ; 4G-4, 4D-4. De manière préférée, chaque capteur de déformation 4 se présente sous la forme d'une jauge de contrainte connue de l'homme du métier.

Les capteurs de déformation 4 sont disposés dans un même plan de mesure afin d'être soumis de manière identique aux effets de la force centrifuge. Les capteurs de déformation 4 permettent de mesurer la force verticale Fz. Conformément à l'invention, le plan de mesure est décalé par rapport au plan de fibre neutre N comme illustré à la figure 3, en particulier, vers la face extérieure B. Un tel positionnement permet de faire varier la mesure de la force verticale Fz en fonction de la position latérale du point de contact roue/rail. En effet, comme chaque capteur de déformation 4 est décalé par rapport à la fibre neutre N, l'effort réciproque appliqué par le rail 2 sur la roue 1 est très sensible à la position longitudinale du point de contact. En particulier, le gradient de contrainte relatif à la flexion de la toile dépend fortement de la position latérale du point de contact.

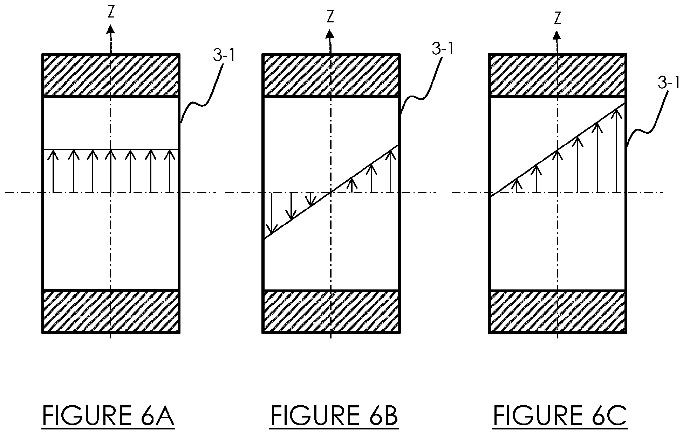

En effet, comme illustré aux figures 6A-6C, le gradient de contrainte à l'intérieur d'un orifice 3 (Figure 6C) est composé d'une partie due à la force de compression (Figure 6A) et d'une partie due à la flexion de la toile (Figure 6B). En dehors du plan de fibre neutre, le gradient de contrainte relatif à la flexion de la toile est plus important. Aussi, en mesurant le gradient de contrainte global (6C) à l'intérieur d'un orifice 3, on peut en déduire la position latérale du point de contact.

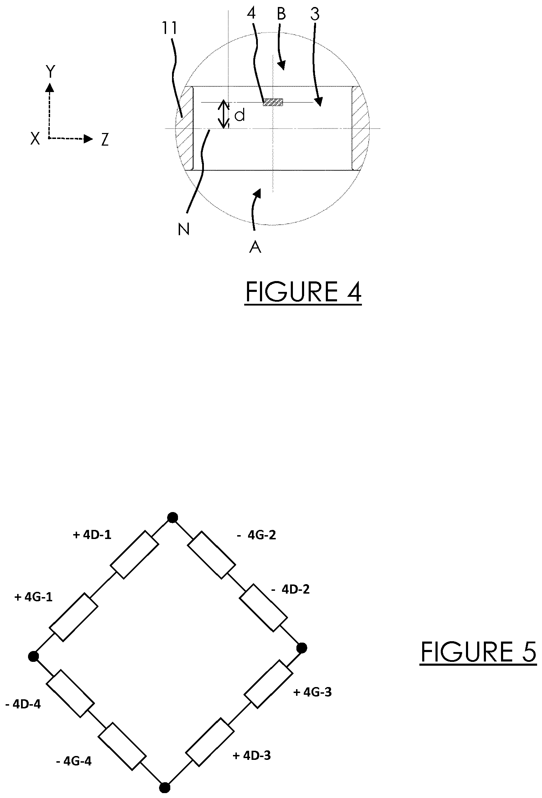

En référence à la figure 4, le plan de mesure des capteurs de déformation 4 est plus proche de la face extérieure B de l'orifice 3 dans lequel il est monté que de la face intérieure A. La distance orthogonale d entre un capteur de déformation 4 et le plan de fibre neutre N dépend du type de roue et est déterminée préalablement, en particulier, par une méthode de détermination par éléments finis. Dans la présente forme de réalisation, la distance d est comprise entre 5 et 15 mm.

Selon une forme de réalisation préférée de l'invention, en référence à la figure 5, les capteurs de déformation 4 des orifices 3 sont reliés pour former un pont de Wheatstone, également appelé « PONT DELTA » et connu en soi de l'homme du métier. Un tel pont est configuré pour mesurer les déformations sur une surface de la roue 1 au cours de son fonctionnement. Les capteurs de déformation 4 sont reliés de manière à compenser la force centrifuge ainsi que les écarts de température. Les signes des capteurs de déformation 4 sur la figure 5 indiquent si le déséquilibre du pont est positif ou négatif, ce type d'indication étant connu de l'homme du métier. Dans cet exemple, en référence à la figure 5, le pont de Wheatstone est configuré pour calculer la différence entre la somme des déformations mesurées dans les premier et troisième orifices diamétralement opposés et la somme des déformations mesurées dans les deuxième et quatrième orifices diamétralement opposés. Un tel pont de Wheatstone permet une compensation naturelle de la force centrifuge, ce qui permet d'éliminer l'impact de la force centrifuge sur les mesures. Le pont de Wheatstone fournit un signal global des déformations de la toile 11 de la roue 1 qui est fonction de la rotation de la roue 1. L'amplitude de ce signal varie en fonction de la position latérale du point de contact comme expliqué précédemment.

Selon un aspect de l'invention, la roue 1 appartient à un dispositif de mesure (non représenté) qui est de préférence embarqué sur le véhicule ferroviaire. Ce dispositif de mesure de forces de contact d'une roue 1 d'un véhicule ferroviaire sur un rail 2 comporte une roue 1 telle que présentée précédemment et un calculateur relié à au moins un capteur de déformation 4 de la roue 1 de manière à calculer les forces appliquées à la roue 1, en particulier, les forces verticales Fz.

De manière préférée, le dispositif de mesure comporte en outre des moyens de détection de la position angulaire de la zone de la roue 1 en contact avec le rail 2, les moyens de détection étant reliés au calculateur. On peut ainsi en déduire quel orifice 3 est à proximité de la zone de contact. De manière préférée, les moyens de détection de la position de la zone de la roue en contact avec le rail se présentent sous la forme d'un codeur angulaire mais il va de soi que d'autres moyens pourraient convenir. A titre d'exemple, le codeur angulaire mesure un angle θ entre la droite passant par un orifice prédéterminé 3 et une droite verticale servant de référence. La lecture de l'angle θ permet ainsi de déterminer qu'elle est l'orifice 3 la plus proche du point de contact roue/rail. La position angulaire de chaque orifice 3 est ainsi définie de manière précise par rapport à l'angle θ. On en déduit avantageusement la position latérale de contact pour toute position angulaire de contact.

Grâce à la roue 1 et au dispositif de mesure de l'invention, on mesure de manière précise les variations de la force verticale et on en déduit la position latérale du point de contact roue/rail pour toute position angulaire.

De manière préférée, la position latérale du point de contact roue/rail est déterminée par comparaison de ladite mesure de déformations verticales avec une mesure de référence obtenue préalablement. De préférence, la mesure de référence est obtenue lors de l'étalonnage du capteur de déformation de la roue sur un banc d'étalonnage.

De manière très avantageuse, il n'est pas nécessaire de recourir à des roues spécifiques pour détecter la position latérale du point de contact roue/rail, une roue standard pouvant être usinée et équipée de capteurs de déformation judicieusement placés afin d'être utilisée comme une roue de mesure.

## Revendications

1. Roue (1) pour un véhicule ferroviaire, la roue (1) comportant une toile (11) dans laquelle est formé au moins quatre orifices (3) à une même distance radiale du centre de la roue (1), écartés angulairement de 90°, au moins un capteur de déformation (4) étant monté dans chaque orifice (3) pour mesurer les déformations verticales (Fz) lors du contact de la roue (1) avec un rail (2), la toile comportant une face intérieure (A), destinée à être tournée vers le centre d'une voie ferroviaire en utilisation, et une face extérieure (B) opposée à la face intérieure (A), la toile (11) comportant un plan de fibre neutre (N) s'étendant dans l'épaisseur de la toile (11) à égale distance de la face intérieure (A) et de la face extérieure (B) dudit orifice (3), la roue étant **caractérisée par le fait que** les capteurs de déformation (4) sont disposés dans un même plan de mesure qui est décalé par rapport audit plan de fibre neutre (N) afin d'augmenter la sensibilité des déformations verticales à la position latérale du point de contact roue/rail.

2. Roue (1) selon la revendication 1, dans laquelle, ledit capteur de déformation (4) s'étend sur une zone de contrainte latérale dudit orifice (3).

3. Roue (1) selon l'une des revendications 1 à 2, dans laquelle le capteur de déformation (4) est décalé par rapport audit plan de fibre neutre (N) vers la face extérieure (B).

4. Roue (1) selon l'une des revendications 1 à 3, dans laquelle chaque orifice (3) comporte au moins deux capteurs de déformation (4G, 4D).

5. Roue (1) selon l'une des revendications 1 à 4 dans laquelle, les capteurs de déformation (4) sont reliés entre eux pour former un pont de Wheatstone adapté pour fournir un signal de déformation (S_{D}).

6. Roue (1) selon la revendication 5, dans laquelle le pont de Wheatstone est configuré pour calculer la différence entre la somme des déformations mesurées dans les premier et troisième orifices (3-1, 3-3) diamétralement opposés et la somme des déformations mesurées dans les deuxième et quatrième orifices (3-2 ; 3-4) diamétralement opposés.

7. Dispositif de mesure de forces de contact d'une roue d'un véhicule ferroviaire sur un rail, le dispositif comportant une roue selon l'une des revendications 1 à 6 et un calculateur relié à ladite roue (1) et configuré pour calculer la position latérale de contact roue/rail en fonction des déformations verticales (Fz) mesurées par ledit capteur de déformation (4).

8. Dispositif selon la revendication précédente, dans lequel le dispositif comporte des moyens de détection de la position angulaire dudit orifice (3) par rapport à la position de contact roue/rail.

9. Procédé de détermination de la position latérale du point de contact roue/rail d'une roue selon l'une des revendications 1 à 6, le procédé comportant :
- une étape de mesure des déformations verticales par le capteur de déformation (4) monté dans l'orifice (3) et décalé par rapport au plan de fibre neutre (N) ; et
- une étape de détermination de la position latérale du point de contact roue/rail par comparaison de ladite mesure de déformations verticales avec une mesure de référence obtenue préalablement.

## Patentansprüche

1. Rad (1) für ein Schienenfahrzeug, wobei das Rad (1) eine Scheibe (11) aufweist, in die mindestens vier Öffnungen (3) im gleichen radialen Abstand vom Zentrum des Rades (1) ausgebildet sind, die in einem Winkel von 90° beabstandet sind, wobei mindestens ein Verformungssensor (4) in jeder Öffnung (3) angebracht ist, um die vertikalen Verformungen (Fz) beim Kontakt des Rades (1) mit einer Schiene (2) zu messen, wobei die Scheibe eine innere Fläche (A) aufweist, die bestimmt ist, in Benutzung zur Mitte eines Eisenbahngleises gerichtet zu sein, und eine äußere Fläche (B) gegenüber der inneren Fläche (A), wobei die Scheibe (11) eine Ebene einer neutralen Faser (N) aufweist, die sich in der Dicke der Scheibe (11) in gleichem Abstand von der inneren Fläche (A) und von der äußeren Fläche (B) der Öffnung (3) erstreckt, wobei das Rad **dadurch gekennzeichnet ist, dass** die Verformungssensoren (4) in derselben Messebene angeordnet sind, die in Bezug auf die Ebene der neutralen Faser (N) versetzt ist, um die Sensibilität der vertikalen Verformungen zu der Seitenposition des Kontaktpunkts Rad/Schiene zu erhöhen.

2. Rad (1) nach Anspruch 1, wobei sich der Verformungssensor (4) auf einer seitlichen Beanspruchungszone der Öffnung (3) erstreckt.

3. Rad (1) nach einem der Ansprüche 1 bis 2, wobei der Verformungssensor (4) in Bezug auf die Ebene der neutralen Faser (N) zur äußeren Fläche (B) versetzt ist.

4. Rad (1) nach einem der Ansprüche 1 bis 3, wobei jede Öffnung (3) mindestens zwei Verformungssensoren (4G, 4D) aufweist.

5. Rad (1) nach einem der Ansprüche 1 bis 4, wobei die Verformungssensoren (4) miteinander verbunden sind, um eine Wheatstone-Brücke zu bilden, die zur Bereitstellung eines Verformungssignals (S_{D}) geeignet ist.

6. Rad (1) nach Anspruch 5, wobei die Wheatstone-Brücke ausgelegt ist, um die Differenz zwischen der Summe der Verformungen, die in der ersten und dritten Öffnung (3-1, 3-3) gemessen werden, die diametral gegenüberliegen, und die Summe der Verformungen in der zweiten und vierten Öffnung (3-2; 3-4) gemessen werden, die diametral gegenüberliegen, zu berechnen.

7. Vorrichtung zum Messen von Kontaktkräften eines Rades eines Schienenfahrzeugs auf einer Schiene, wobei die Vorrichtung ein Rad nach einem der Ansprüche 1 bis 6 und einen Rechner aufweist, der mit dem Rad (1) verbundenen und ausgelegt ist, um die seitliche Kontaktposition Rad/Schiene in Abhängigkeit von den vertikalen Verformungen (Fz) zu berechnen, die von dem Verformungssensor (4) gemessen werden.

8. Vorrichtung nach vorangehendem Anspruch, wobei die Vorrichtung Detektionsmittel der Winkelposition der Öffnung (3) in Bezug auf die Kontaktposition Rad/Schiene aufweist.

9. Verfahren zum Bestimmen der Seitenposition des Kontaktpunkts Rad/Schiene eines Rades nach einem der Ansprüche 1 bis 6, wobei das Verfahren aufweist:
- einen Schritt des Messens der vertikalen Verformungen durch den Verformungssensor (4), der in der Öffnung (3) angebracht und in Bezug auf die Ebene der neutralen Faser (N) versetzt ist; und
- einen Schritt des Bestimmens der Seitenposition des Kontaktpunkts Rad/Schiene durch Vergleichen der Messung vertikaler Verformungen mit einer zuvor erhaltenen Referenzmessung.

## Claims

1. A wheel (1) for a railway vehicle, the wheel (1) comprising a wheel plate (11), in which at least four openings (3) are formed at a same radial distance from the centre of the wheel (1), angularly deviated by 90°, at least one deformation sensor (4) being mounted in each opening (3) to measure vertical deformations (Fz) when the wheel (1) contacts a rail (2), the wheel plate comprising an internal face (A), for pointing to the centre of a rail track in use, and an external face (B) opposite to the internal face (A), the wheel plate (11) comprising a neutral fibre plane (N) extending in the thickness of the wheel plate (11) at an equal distance from the internal face (A) and from the external face (B) of said opening (3), the wheel being **characterised in that** the deformation sensors (4) are disposed in a same measurement plane which is offset with respect to the neutral fibre plane (N) in order to increase sensitivity of vertical deformations to the side position of the wheel/rail contact point.

2. The wheel (1) according to claim 1, wherein said deformation sensor (4) extends on a side stress zone of said opening (3).

3. The wheel (1) according to one of claims 1 to 2, wherein the deformation sensor (4) is offset with respect to said neutral fibre plane (N) to the external face (B).

4. The wheel (1) according to one of claims 1 to 3, wherein each opening (3) comprises at least two deformation sensors (4G, 4D).

5. The wheel (1) according to one of claims 1 to 4, wherein the deformation sensors (4) are connected to each other to form a Wheatstone bridge adapted to provide a deformation signal (S_{D}).

6. The wheel (1) according to claim 5, wherein the Wheatstone bridge is configured to calculate difference between the sum of the deformations measured in the diametrically opposite first and third openings (3-1, 3-3) and the sum of the deformations measured in the diametrically opposite second and fourth openings (3-2; 3-4).

7. A device for measuring contact forces of a wheel of a railway vehicle on a rail, the device comprising a wheel according to one of claims 1 to 6 and a calculator connected to said wheel (1) and configured to calculate the wheel/rail contact side position as a function of vertical deformations (Fz) measured by said deformation sensor (4).

8. The device according to the preceding claim, wherein the device comprises means for detecting the angular position of said opening (3) with respect to the wheel/rail contact position.

9. A method for determining the wheel/rail contact point side position of a wheel according to one of claims 1 to 6, the method comprising:
- a step of measuring vertical deformations by the deformation sensor (4) mounted into the opening (3) and offset with respect to the neutral fibre plane (N); and
- a step of determining the wheel/rail contact point side position by comparing said measurement of vertical deformations with a reference measurement obtained beforehand.
